(19) **Europäisches Patentamt**

**European Patent Office**

**Office européen des brevets**

(11) **EP 1 234 999 B1**

(12) **EUROPEAN PATENT SPECIFICATION**

(45) Date of publication and mention
of the grant of the patent:
**01.02.2006 Bulletin 2006/05**

(51) Int Cl.:
**_F16G 13/04_** _(2006.01)_

(21) Application number: **02003815.4**

(22) Date of filing: **20.02.2002**

(54) **Silent chain**

Zahnkette

Chaine à dents

(84) Designated Contracting States:
**DE FR GB**

(30) Priority: **21.02.2001 JP 2001045239**

(43) Date of publication of application:
**28.08.2002 Bulletin 2002/35**

(73) Proprietor: **Tsubakimoto Chain Co.**
**Osaka-shi,**
**Osaka (JP)**

(72) Inventors:
• **Okabe, Isamu,**
**Tsubakimoto Chain Co.,**
**Chuo-ku,**
**Osaka-shi,**
**Osaka (JP)**

• **Shimaya, Kazuhiko,**
**Tsubakimoto Chain Co.,**
**Chuo-ku,**
**Osaka-shi,**
**Osaka (JP)**

(74) Representative: **Maisch, Thomas**
**Ullrich & Naumann,**
**Patent- und Rechtsanwälte,**
**Luisenstrasse 14**
**69115 Heidelberg (DE)**

(56) References cited:
**EP-A- 0 926 392           GB-A- 2 128 712**
**US-A- 5 857 318           US-A- 6 068 568**

EP 1 234 999 B1

## Description

Field of the Invention

The present invention relates to a silent chain according to the preamble part of claim 1 used for power transmission such as a timing drive of an automobile or a motorcycle and a chain drive of a general purpose engine, a diesel engine and an industrial machine, particularly to a silent chain suitable for a timing chain of an engine.

Prior Art

EP-A-0 926 392 is showing a silent chain comprising all features of the preamble part of claim 1. Bushings 4 are pressed into bushing holes 5A of inner link plates 5.

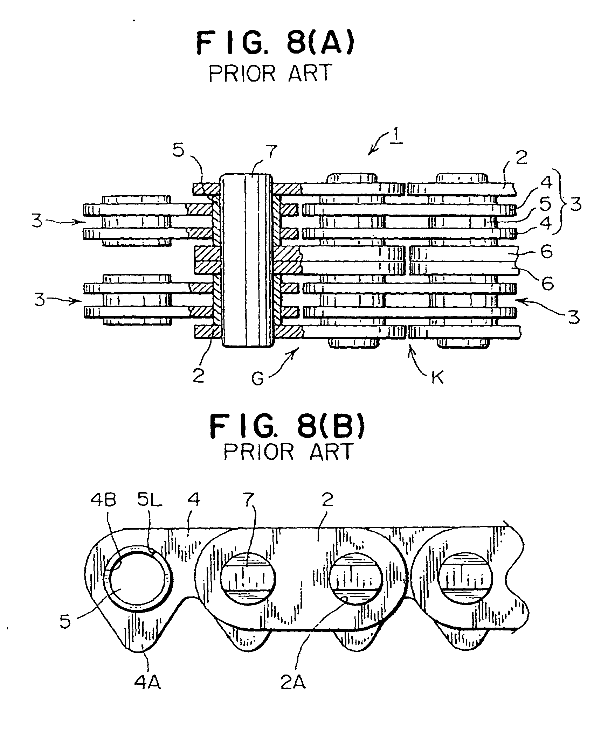

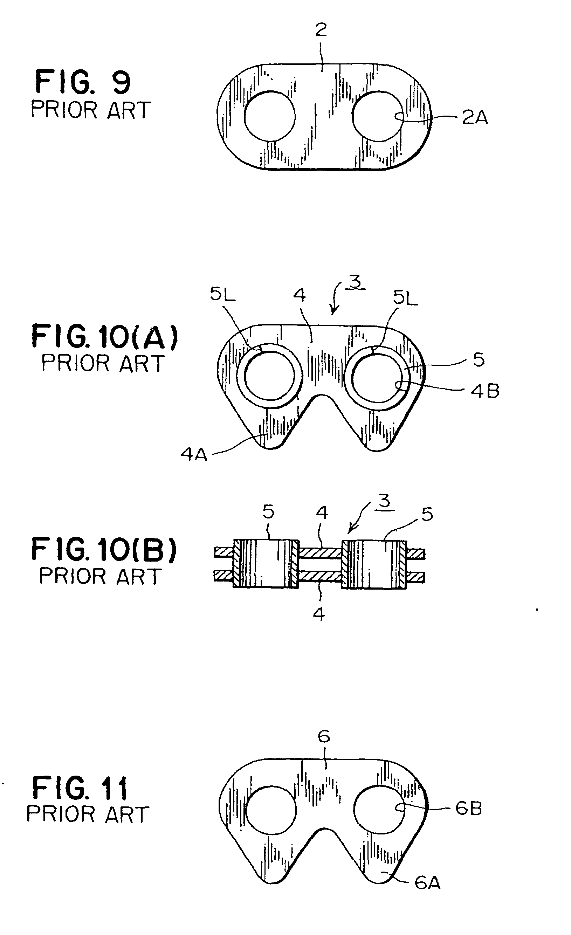

Figs. 8 and 9 show a silent chain 1 attached with a bushing as an example of a conventional silent chain. In the silent chain 1, guide plates 2, link assemblies 3 and middle link plates 6 are arranged in a chain width direction as shown in Figs. 8(A) and 8(B), assembled in a longitudinal direction shifting their positions with each other, that is, assembled in an interlinked manner, and connected by a connection pin 7 freely bendably

The guide plate 2 does not include an engage tooth but has a pair of pin holes 2A as shown in Fig. 9. The link assembly 3 is one in which two inner link plates 4 having a pair of teeth 4A that engage with teeth of a sprocket and a pair of bushing holes 4B are connected and fixed by two (that is, a pair of) bushings 5 that are pressed into the bushing holes and unified. The bushing 5 is usually a roll bushing in which a steel plate is processed and formed into a tubular shape, and a seam 5L occurs on an inner circumference surface in a longitudinal direction. Further, the middle link plate 6 has a pair of teeth 6A that engage with the sprocket teeth and a pair of pin holes 6B.

In the silent chain 1, two middle link plates 6 are arranged in the center of a chain width direction, the link assemblies 3 are arranged at both outsides thereof, the guide plates 2 are arranged at both outermost sides and they are assembled shifting positions alternately in the interlinked manner and connected by the connection pin 7 freely bendably as shown in Fig. 8(A). In this case, the connection pin 7 is pressed and fixed into the both outermost guide plates 2 through the pin holes 2A, and the connection pin 7 is loosely fitted into or pressed and fixed into the middle link plate through the pin holes.

In the silent chain 1, the guide plate 2 and the middle link plates (6, 6), which are placed in the chain width direction, compose a guide link row G, and two link assemblies (3, 3) compose a joint link row K. The guide link row G and the joint link row K are relatively freely bendable because the bushing 5 of the link assembly 3 is freely rotatable to the connection pin 7. When the silent chain 1 is used as a timing chain of an engine, for example, a clearance C is provided between the end surface of end portion of the bushing 5 and the guide plate 2 or the middle link plate 6 to make it easier for lubricating oil to infiltrate between the connection pin 7 and the bushing 5.

As in the foregoing, in the conventional silent chain since the roll bushing, in which a metal plate is processed into a roll shape is used as the bushing of the link assembly, circularity is difficult to be maintained, and the seam 5L occurs on its inner circumference surface in a longitudinal direction. Therefore, there exists a problem that the roll bushing promotes abrasion of the connection pin and the bushing itself to cause abrasive elongation of chain when the link assembly rotates around the connection pin via the bushing during traveling of the silent chain.

Further, when the lubricating oil is supplied to restrict abrasion of the connection pin and the bushing, there are cases where the link assembly is driven to one side of a chain width direction during traveling of the silent chain even if the clearance C is provided between the end surface of end portion of the bushing and the guide plate or the middle link plate, or the lubricating oil is not sufficiently supplied between the connection pin and the inner circumference surface of the bushing when the clearance C has a variance due to the accuracy of bushing and the assembly accuracy of chain. As a result, there exists a problem that the abrasion occurs on the connection pin and the bushing.

Particularly, when the silent chain is used as a timing chain of a diesel engine, engine oil is used as the lubricating oil for the timing chain similarly to a gasoline engine. The engine oil for the diesel engine deteriorates faster than the one for the diesel engine, and the deterioration of oil reduces lubricating characteristics. Thus, there exists a problem that abrasion reduction of the connection pin and the bushing becomes difficult to promote the abrasive elongation of the silent chain. Accordingly, if the timing chain of the diesel engine has a large elongation, there exists a problem that engine performance reduces, and in the worst case, interference occurs between a valve and a cylinder to damage the engine. The silent chain conventionally has not been used as the timing chain for diesel engine due to these problems.

SUMMARY OF THE INVENTION

Therefore, the object of the present invention is to solve the foregoing problems and provide a silent chain in which the bushing of the link assembly composing the silent chain has a structure that the lubricating oil easily infiltrate between the connection pin and the inner circumference surface of the bushing, and that can restrict abrasion of the connection pin and the bushing and restrict the abrasive elongation of chain. Particularly, the present invention is directed to provide a silent chain that can be used as a timing chain of a diesel engine.

The invention is defined by a silent chain according to claim 1.

To achieve the foregoing object, the present invention according to a first preferred aspect is the silent chain that includes: the link assembly where at least two inner link plates having a pair of teeth that engage with the sprocket teeth and the bushing holes are connected and fixed with a pair of bushings pressed into several bushing holes; the middle link plate having a pair of teeth that engage with the sprocket teeth and pin holes; the guide plate having a pair of pin holes; and the connection pin that connects the link assembly, the middle link plate and the guide plate freely bendably, in which a configuration is made that the bushing of the link assembly is a solid-type bushing, and a plurality of notched concave areas for reserving oil are formed on end surfaces of both end portions thereof. The present invention according to a second preferred aspect is the silent chain according to the first aspect, in which a configuration is made that the notched concave area for reserving oil has a depth that does not reach an inner link plate fixed to the bushing.

In the silent chain of the present invention, abrasion between the connection pin and the inner circumference surface of the bushing reduces because the bushing of the link assembly is the solid-type bushing, and infiltration of the lubricating oil between the connection pin and the bushing is smoothly performed because the notched concave areas for reserving oil are formed on the end surface of both end portions of the bushing. Abrasion of the connection pin and the bushing is restricted by synergic effect of abrasion reduction.

Since the notched concave areas for reserving oil, which is formed on the end surface of both end portions of the bushing composing the link assembly, have the depth that does not reach the inner link plate fixed to the bushing, the inner link plate is fixed to the bushing at an area where the notched concave areas for reserving oil are not formed. In addition, since the notched concave areas for reserving oil are not formed deep in a bushing longitudinal direction and reduction of bushing strength is prevented, the bushing and the chain are not damaged even if tension is applied during traveling of the silent chain.

Furthermore, since the inner link plate is fixed to the bushing at the area where the notched concave areas for reserving oil are not formed when the bushing is pressed into the bushing hole of the inner link plate at the time of forming the link assembly, distortion does not occur in the bushing and deformation of a bush inner diameter does not occur. As a result, circularity of the bushing is maintained, and abrasion of the connection pin and the bushing is thus restricted.

BRIEF DESCRIPTION OF THE DRAWINGS

Fig. 1 is a partially notched plan view of a link assembly in a silent chain of a first embodiment according to the present invention.
Fig. 2 is a partially notched perspective view of a bushing of the first embodiment.
Fig. 3(A) is a partially notched cross-sectional view of the link assembly, and Fig. 3(B) is a side view of the bushing.
Fig. 4 is a side view of the bushing in another mode.
Fig. 5 is an exemplary view of a notched concave area for reserving oil, which is provided on the end surface of the bushing.
Fig. 6 is an exemplary view of the notched concave area for reserving oil, which is provided to the bushing composing a link assembly in a silent chain of a second embodiment according to the present invention.
Figs. 7(A) and (B) show a silent chain different from the first and second embodiments, in which (A) is a partial plan view, a portion of which is in a notched cross-section, and (B) is a partial side view.
Figs. 8CAa and (B) show a conventional silent chain, in which (A) is a partial plan view, a portion of which is in a notched cross-section, and (B) is a partial side view.
Fig. 9 is a side view of a guide plate used in the conventional silent chain.
Fig. 10(A) is a side view of a link assembly used in the conventional silent chain, and (B) is a cross-sectional view of the link assembly.
Fig. 11 is a side view of a middle link plate used in the conventional silent chain.
Fig. 12 is a partial plan view of a vicinity of the link assembly used in the conventional silent chain.
Fig. 13 is a graph showing a comparison test result of silent chain elongation.

PREFERRED EMBODIMENTS OF THE INVENTION

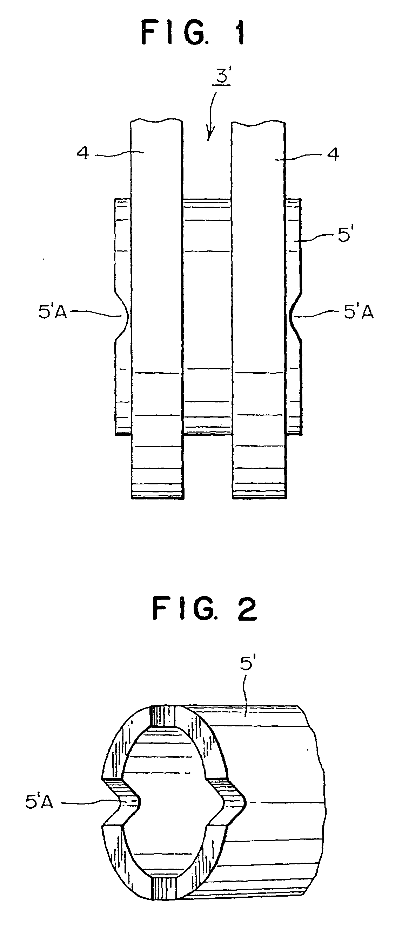

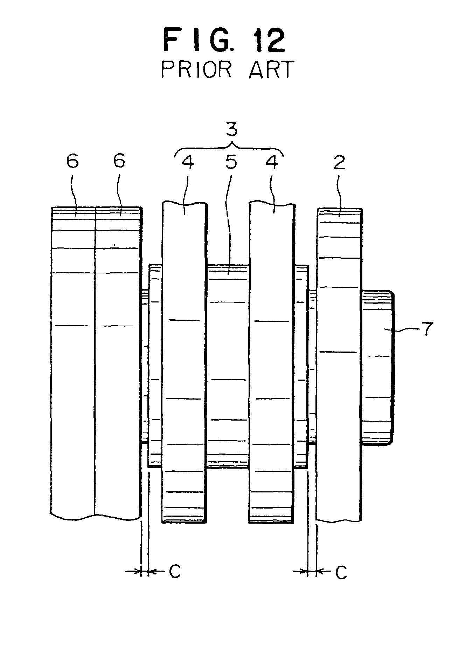

The first embodiment of the present invention will be described based on Figs. 1 to 3. Since the silent chain of the present invention is the same as the conventional silent chain shown in Figs. 8 to 12 except for the link assembly, the same reference numerals are added to modes and members same as the conventional silent chain, and their explanation is made as follows. The entire image of the silent chain is omitted, and a specific structure will be briefly explained.

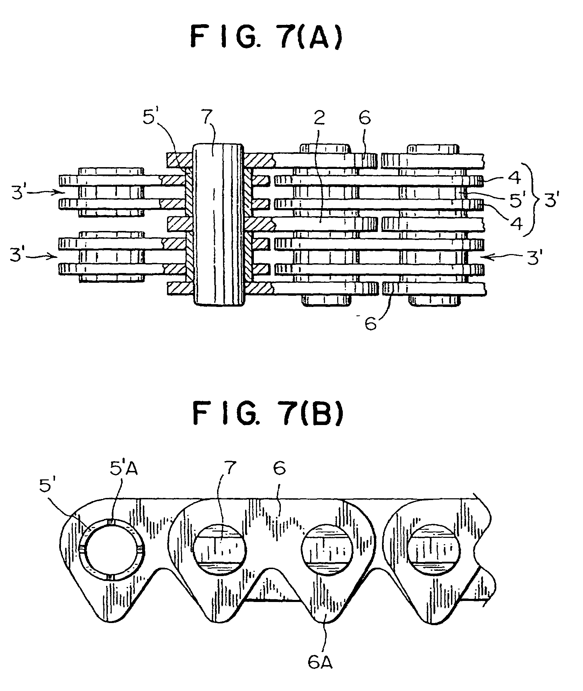

The silent chain is one in which the guide plate 2, link assemblies 3' (corresponds to the link assembly 3 in Fig. 7) and the middle link plates 6 are arranged in a chain width direction, assembled alternately in a longitudinal direction shifting their positions, that is, in an interlinked manner, and connected by the connection pin 7 freely bendably. Similarly to the foregoing conventional silent chain 1, the guide plate 2 does not include teeth that engage with the sprocket teeth but has a pair of pin holes 2A, and the middle link plate 6 has a pair of teeth 6A that engage with the sprocket teeth and a pair of pin holes 6B.

In the silent chain 1, the guide plate 2 and the middle link plates (6, 6), which are placed in a chain width direction, compose the guide link row G, and two link assemblies (3', 3') that are placed in a chin width direction compose the joint link row K, and the guide link row G and the joint link row K are relatively freely bendable.

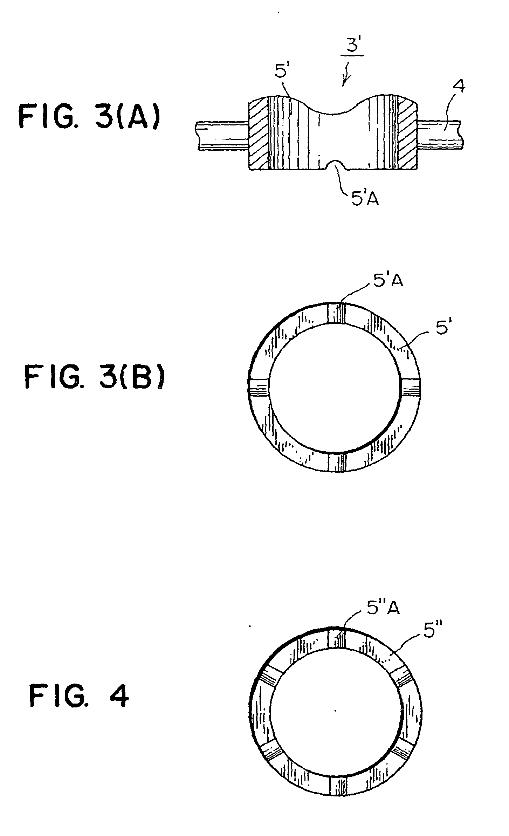

Figs. 1 and 3 show the link assembly 3', and the link assembly 3' is one in which two inner link plates 4, which have a pair of teeth 4A that engage with the sprocket teeth and a pair of bushing holes 4B, are connected and fixed by two (that is, a pair of) bushings 5' that are pressed into the bushing holes, and unified.

The bushing 5', unlike the conventional roll bushing 5, is the solid-type bushing of a tubular shape without the seam (5L shown in Fig. 1) made in a longitudinal direction, notched concave areas 5'A for reserving oil are formed on the end surface of both end portions of the bushing 5', and four of the notched concave areas 5'A are provided with an equal distance as shown in Fig. 3(B). The notched concave areas 5'A are formed in a curvature shape having rounded corners of r1 and r2 on edge appropriately.

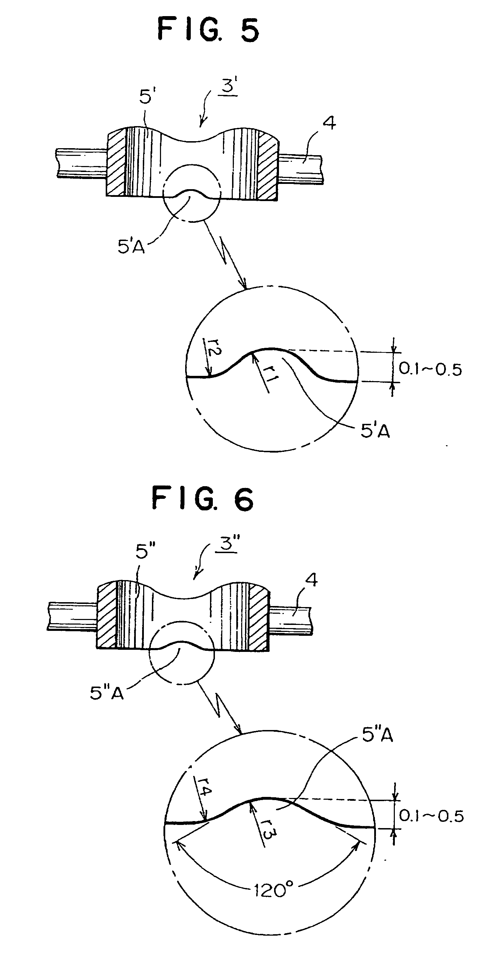

The second embodiment of the present invention will be described based on Fig. 6. The silent chain of the second embodiment has a different shape of notched concave areas 5"A provided on the end surface of end portions of a bushing 5" that composes a link assembly 3" from the one of the first embodiment. The notched concave areas 5"A are formed with an inclined surface having an angle of 120° degrees, and formed in a curvature shape having rounded corners of r3 and r4 on edge appropriately.

Although description has been made for the first and second embodiments, six or more of the notched concave areas (refer to Fig. 4) instead of four may be provided with an equal distance as another mode. Three or more link plates instead of two may form the link assembly. Two or more link plates may form the link assembly. Further, three or more link assemblies that compose the joint link row K may be arranged instead of two, and the middle link plate 6 arranged in the guide link row G may be either singular or plural and may be arranged in plural positions.

As the first and second embodiments, description has been made for the silent chain as shown in Fig. 8(A), that is, the silent chain that includes: two middle link plates 6 arranged in the center of chain width direction, the link assemblies (3', 3") arranged on the both outsides of the middle link plates 6; the guide plates 2 arranged on the both outermost sides; and the connection pin 7. As another type of the silent chain, a silent chain 1' may be a type that includes: the guide plate 2 arranged inside of chain width direction (the center, for example); the link assemblies (3', 3') arranged outside thereof; the outer link plates (6, 6) arranged on both outermost sides, in which these are assembled in an interlinked manner and connected by the connection pin 7, as shown in Figs. 7(A) and (B). In other words, the silent chain of the present invention may be the silent chain that includes: the link assembly where at least two inner link plates having a pair of teeth that engage with sprocket teeth and bushing holes are connected and fixed with a pair of bushings pressed into several bushing holes; the middle link plate having a pair of teeth that engage with the sprocket teeth and pin holes; the guide plate having a pair of pin holes; and the connection pin that connects them freely bendably. When the silent chain is wound to the sprocket and used as a transmission device, the sprocket, whose outer circumference surface has a concave groove of a ring shape to which the guide plate can be inserted, is used.

Moreover, although the clearance C may be provided between the end surface of both end portions of the bushing that composes the ink assembly and the guide plate or the middle link plate, it may not be provided because the lubricating oil easily infiltrates from the notched concave area for reserving oil.

Further, although the size of the silent chain of the present invention is not particularly limited, an example of dimensions is as follows when it is used as the timing chain of an engine. The link assembly has a bushing length L at about 4.5 mm, a tubular plate thickness T at about 0.7 mm, a tube diameter R (inner diameter) at about 4.5 mm, a depth of the notched concave area H at 0.1 to 0.5 mm, and a distance M between the notched concave area and the inner link plate at 0.1 mm or more. Accordingly, it is preferable for the bushing, which composes the link assembly, that the depth H of the notched concave area of bushing simultaneously satisfies the both expressions:

$$H = 1/45L \text{ to } 1/9L$$

$$H \leqq T$$

where

H: the depth of the notched concave area,
L: the bushing length, and
T: the tubular plate thickness.

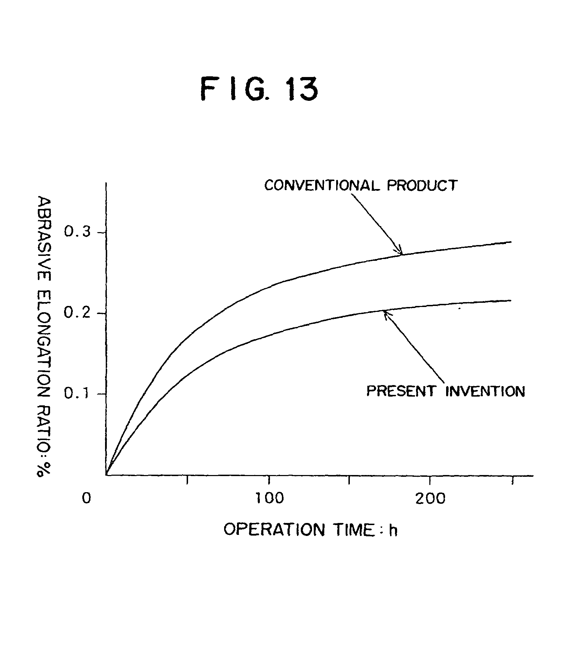

Next, Fig. 13 shows the graph of the comparison test result between the silent chain (the present invention) and the conventional silent chain (the conventional product). The silent chain used in the test is the one having a configuration shown in Fig. 7, and only the bushing that composes the link assembly is different between the silent chain of the present invention (corresponds to the first embodiment) and the conventional silent chain. In each silent chain, the inner link plate, the middle link plate and the guide plate have the longest length in a longitudinal direction at about 16 mm, and the diameter of the connection pin is slightly smaller than 4.5 mm. The bushing that composes the link assembly is the solid-type bushing for the present invention and the roll bushing for the conventional product, in which the both bushings are alloy case hardening steel with the dimensions: the length at about 4.5 mm; the tubular plate thickness at about 0.7 mm; the tube diameter (inner diameter) at slightly larger than 4.5 mm; and the clearance C at about 0.1 mm. The link assembly of the present invention has the depth of the notched concave area of bushing at about 0.3 mm and the distance between the top of the notched concave area and the inner link plate at about 0.2 mm, and the conventional link assembly does not have the notched concave area on the both end surfaces of the bushing and the inner link plate is fixed at a position about 0.5 mm apart from the end surface of the bushing. Further, the chain length was measured on time series with the following test conditions. The sprocket of 21NT × 42NT was used, the chain speed was set at about 19 m/sec., the chain tension was set about 1.8 KN, and the chain was allowed to travel on the sprocket while being lubricated.

The chain elongation ratio is a ratio of an amount of chain elongation after performing the test to the chain length before the traveling test, and the elongation ratio is significantly improved in the silent chain of the present invention comparing to the conventional silent chain as seen in Fig. 13.

As described, in the silent chain of the present invention, since the bushing that composes the link assembly is the solid-type bushing, the inner circumference surface of the bushing does not have the seam made in a longitudinal direction like the conventional bushing, and friction between the connection pin and the inner circumference surface of the bushing can be reduced. Furthermore, since the notched concave areas for reserving oil are formed on the end surface of both end portions of the bushing, the lubricating oil easily infiltrates between the connection pin and the bushing, and friction between the connection pin and the inner circumference surface of the bushing can be reduced. As a result, abrasion of the connection pin and the bushing can be restricted by synergic effect of friction reduction of the both. Accordingly, the silent chain can be used as the timing chain of a diesel engine.

In the link assembly of the silent chain of the present invention, the notched concave areas for reserving oil formed on the end surface of both end portions of the bushing have the depth that does not reach the inner link plate fixed to the bushing, and thus the inner link plate is fixed to the bushing at an area where the notched concave areas for reserving oil are not formed. In addition, since the notched concave areas for reserving oil are not formed deep in a bushing longitudinal direction, reduction of bushing strength can be prevented. As a result, the bushing and the chain can be prevented from damage even if tension is applied during traveling of the silent chain.

Furthermore, since the inner link plate is fixed at an area where the notched concave areas for reserving oil are not formed when the bushing is pressed into the bushing hole of the inner link plate at the time of forming the link assembly, distortion does not occur in the bushing and deformation of the bush inner diameter does not occur. As a result, since circularity of the bushing is maintained, contact between the connection pin and the inner circumference surface of the bushing at one side is eliminated, and abrasion of the connection pin and the bushing is thus restricted.

## Claims

1. A silent chain (1) comprising:

   a link assembly (3', 3") where at least two inner link plates (4) having a pair of teeth (4A) that engage with sprocket teeth and bushing holes (4B), are connected and fixed with a pair of bushings (5', 5") being pressed into said bushing holes (4B);
   a middle link plate (6) having a pair of teeth (6A) that engage with the sprocket teeth and pinholes (6B);
   a guide plate (2) having a pair of pin holes (2A); and
   a connection pin (7) that connects the link assemblies (3', 3"), the middle link plates (6) and the guide plate (2) freely bendably, **characterized in that**
   said bushings (5', 5") of said link assembly (3', 3") are solid-type seamless bushings (5', 5").

2. A silent chain (1) according to claim 1, wherein said bushings (5', 5") of said link assembly (3', 3") have a plurality of notched concave areas (5'A, 5"A) at surfaces of both end portions of the bushing (5', 5").

3. A silent chain (1) according to claim 2, wherein said bushing (5', 5") fulfills conditions that H is equal to or smaller than T, H is between a range 1/45L to 1/9L, where H is a depth of said notched concave area (5'A, 5"A) and L is a length of said bushing (5', 5").

4. A silent chain (1) according to claim 2 or 3, wherein four or six of said notched concave areas (5'A, 5"A) are formed.

5. A silent chain (1) according to any one of preceeding claims, wherein said silent chain (1) is a timing chain for a diesel engine.

## Patentansprüche

1. Zahnkette (1), umfassend:

einen Gliedaufbau (3', 3"), wobei zumindest zwei innere Kettenlaschen (4), die ein Paar von Zähnen (4A), die mit Kettenradzähnen eingreifen, und Hülsenlöcher (4B) aufweisen, mit einem Paar von Hülsen (5', 5") verbunden und fixiert sind, die in die Hülsenlöcher (4B) eingepresst sind,

eine mittlere Kettenlasche (6), die ein Paar von Zähnen (6A), die mit den Kettenradzähnen eingreifen, und Stiftlöcher (6B) aufweist,

eine Führungslasche (2), die ein Paar von Stiftlöchem (2A) aufweist, und

einen Verbindungsstift (7), der die Gliedaufbauten (3', 3"), die mittleren Kettenlaschen (6) und die Führungslasche (2) frei schwenkbar verbindet, **dadurch gekennzeichnet, dass**

die Hülsen (5', 5") des Gliedaufbaus (3', 3") nahtlose Vollmaterial-Hülsen (5', 5") sind.

**2.** Zahnkette (1) nach Anspruch 1, worin die Hülsen (5', 5") des Gliedaufbaus (3', 3") eine Vielzahl von eingekerbten konkaven Bereichen (5'A, 5"A) an Oberflächen beider Endabschnitte der Hülse (5', 5") aufweisen.

**3.** Zahnkette (1) nach Anspruch 2, worin die Hülse (5', 5") die Bedingungen erfüllt, dass H gleich oder kleiner als T ist und H in einem Bereich von 1/45L bis 1/9L liegt, wobei H eine Tiefe des eingekerbten konkaven Bereichs (5'A, 5"A) und L eine Länge der Hülse (5', 5") sind.

**4.** Zahnkette (1) nach Anspruch 2 oder 3, worin vier oder sechs der eingekerbten konkaven Bereiche (5'A, 5"A) ausgebildet sind.

**5.** Zahnkette (1) nach einem der vorhergehenden Ansprüche, worin die Zahnkette (1) eine Steuerkette für einen Dieselmotor ist.

## Revendications

**1.** Une chaîne silencieuse (1) comprenant :

un ensemble de chaînon (3', 3") où au moins deux maillons intérieurs (4) ayant une paire de dents (4A) qui viennent en prise avec des dents d'un pignon à chaîne et des trous de douille (4B) sont reliés avec une paire de douilles (5', 5") qui sont comprimées dans lesdits trous de douille (48) ;

un maillon médian (6) ayant une paire de dents (6A) qui viennent en prise avec les dents de pignon à chaîne et des trous de broches (6B) ;

une plaque de guidage (2) ayant une paire de trous de broches (2A) ; et

une broche de liaison (7) qui relie les ensembles de chaînon (3', 3"), les maillons médians (6) et la plaque de guidage (2) de manière à pouvoir plier librement,

**caractérisée par le fait que** lesdites douilles (5', 5") dudit ensemble de chaînon (3', 3") sont des douilles du type à âme pleine sans soudure (5', 5").

**2.** Une chaîne silencieuse (1) selon la revendication 1, dans laquelle lesdites douilles (5', 5") dudit ensemble de chaînon (3', 3") ont une pluralité d'aires concaves entaillées (5'A, 5"A) à des surfaces des deux portions d'extrémité de la douille (5', 5").

**3.** Une chaîne silencieuse (1) selon la revendication 2, dans laquelle ladite douille (5', 5") satisfait les conditions que H est égal ou inférieur à T, H est à l'intérieur d'une plage 1/45L à 1/9L, où H est une profondeur de ladite surface concave entaillée (5'A, 5"A) et L est une longueur de ladite douille (5', 5").

**4.** Une chaîne silencieuse (1) selon la revendication 1 ou 2, dans laquelle quatre ou six desdites surfaces concaves entaillées (5'A, 5"A) sont formées.

**5.** Une chaîne silencieuse (1) selon l'une quelconque des revendications précédentes, dans laquelle ladite chaîne silencieuse (1) est une chaîne de distribution pour un moteur diesel.

# FIG. 1

# FIG. 2

FIG. 3(A)

FIG. 3(B)

FIG. 4

# FIG. 5

5'    3'

4

5'A

r2

r1

0.1~0.5

5'A

# FIG. 6

5"    3"

4

5"A

5"A

r4

r3

0.1~0.5

120°

# F I G. 7(A)

# F I G. 7(B)

# FIG. 8(A)
## PRIOR ART

**FIG. 9**
PRIOR ART

2

2A

**FIG. 10(A)**
PRIOR ART

5L    4    3    5L

5

4B

4A

**FIG. 10(B)**
PRIOR ART

5    4    3    5

4

**FIG. 11**
PRIOR ART

6

6B

6A

# F I G. 12
## PRIOR ART

# F I G. 13